(19) Europäisches Patentamt
European Patent Office
Office européen des brevets

(11) **EP 1 251 329 B2**

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**25.12.2013 Patentblatt 2013/52**

(45) Hinweis auf die Patenterteilung:
**18.08.2010 Patentblatt 2010/33**

(21) Anmeldenummer: **02008562.7**

(22) Anmeldetag: **16.04.2002**

(51) Int Cl.:
***G01B 11/00*** (2006.01)

(54) **Verfahren zur Arbeitspunktstabilisierung bei berührungsloser 3D-Positionserkennung eines Objektes mittels Digitalkameras**

Procedure to stabilise the viewed point by 3D-positiondetermination of an object with a digital camera

Procédé pour stabiliser le point de mire dans la détermination tridimensionnelle de la position d'un objet avec une caméra digitale

(84) Benannte Vertragsstaaten:
**AT BE CH CY DE DK ES FI FR GB GR IE IT LI LU MC NL PT SE TR**

(30) Priorität: **16.04.2001 DE 10118514**

(43) Veröffentlichungstag der Anmeldung:
**23.10.2002 Patentblatt 2002/43**

(73) Patentinhaber: **VMT Vision Machine Technic Bildverarbeitungssysteme GmbH 68219 Mannheim (DE)**

(72) Erfinder: **Grünewald,Dirk,Dipl.-Ing. 64584 Biebesheim (DE)**

(74) Vertreter: **Mierswa, Klaus MIERSWA &VONNEMANN Patentanwälte Postfach 10 25 52 68025 Mannheim (DE)**

(56) Entgegenhaltungen:
EP-A1- 0 763 406     EP-A2- 1 143 221

- PEDERSINI F ET AL: "Accurate and simple geometric calibration of multi-camera systems" SIGNAL PROCESSING, AMSTERDAM, NL, Bd. 77, Nr. 3, September 1999 (1999-09), Seiten 309-334, XP004179213 ISSN: 0165-1684
- FUA P: "Using model-driven bundleadjustment to model heads from raw video sequences" COMPUTER VISION, 1999. THE PROCEEDINGS OF THE SEVENTH IEEE INTERNATIONAL CONFERENCE ON KERKYRA, GREECE 20-27 SEPT. 1999, LOS ALAMITOS, CA, USA,IEEE COMPUT. SOC, US, 20. September 1999 (1999-09-20), Seiten 46-53, XP010350469 ISBN: 0-7695-0164-8
- TRIGGS B: "Autocalibration and the absolute quadric" COMPUTER VISION AND PATTERN RECOGNITION, 1997. PROCEEDINGS., 1997 IEEE COMPUTER SOCIETY CONFERENCE ON SAN JUAN, PUERTO RICO 17-19 JUNE 1997, LOS ALAMITOS, CA, USA,IEEE COMPUT. SOC, US, 17. Juni 1997 (1997-06-17), Seiten 609-614, XP010237414 ISBN: 0-8186-7822-4
- ROUSSO B ET AL: "Varying focal length self-calibration and pose estimation from two images" COMPUTER VISION AND PATTERN RECOGNITION, 1998. PROCEEDINGS. 1998 IEEE COMPUTER SOCIETY CONFERENCE ON SANTA BARBARA, CA, USA 23-25 JUNE 1998, LOS ALAMITOS, CA, USA,IEEE COMPUT. SOC, US, 23. Juni 1998 (1998-06-23), Seiten 469-474, XP010291640 ISBN: 0-8186-8497-6
- P. FUA: 'Using Model-Driven Bundle-Adjustment to Model Heads from Raw Video Sequences', 1999, COMPUTER GRAPHICS LAB (LIG), SWITZERLAND Seiten 46 - 53
- B. TRIGGS: 'Autocalibration and the Absolute quadric', 1997, INRIA, MONTBONNOT ST. MARTIN Seiten 609 - 614

EP 1 251 329 B2

- B. ROUSSO ET AL.: 'Varying focal length self-calibration and pose estimation from two images', 1998, INSTITUTE OF COMPUTER SCIENCE, ISRAEL Seiten 469 - 473
- F. PEDERSINI ET AL.: 'Multi-Camera Systems - Calibration and Applications', Mai 1999, IEE SIGNAL PROCESSING MAGAZINE Seiten 55 - 65
- Y. KITA ET AL.: 'A quick 3D-2D registration method for a wide-range of applications', 2000 Seiten 981 - 986
- RÜGER ET AL.: 'Photogrammetrie - Verfahren und Geräte', Bd. 4, VEB VERLAG, BERLIN Seiten 14 - 84
- E. KRUCK: 'Lösung großer Gleichungssysteme für photogrammetrische Blockausgleichungen mit erweitertem funktionalen Modell', Bd. 128, 1983 Seiten 1 - 37
- K. KRAUS: 'Photogrammetrie', FERD DÜMMLER VERLAG, BONN
- W. WESTER-EBBINGHAUS: 'Zur Verfahrensentwicklung in der Nahbereichsphotogrammetrie', 1981, WILFRIED WESTER-EBBINGHAUS, BIELEFELD Seiten 1 - 91
- W. BLASCHKE: 'Kinematik und Quaternionen', 1960, VED DEUTSCHER VERLAG DER WISSENSCHAFTEN, BERLIN Seiten 2 - 5
- R. GERDES ET AL.: 'Kalibrierung eines digitalen Bildverarbeitungssystems mit CCD-Kamera', Bd. 6, 1993, R. OLDENBURG VERLAG Seiten 255 - 288
- R. Y. TSAI: 'A Versatile Camera Calibration Technique for High-Accuracy 3D Machine Vision Metrology Using Off-the-Shelf TV Cameras and Lenses' IEEE JOURNAL OF ROBOTICS AND AUTOMATION Bd. RA 3, Nr. 4, August 1987, Seiten 323 - 344

**Beschreibung**

Technisches Gebiet:

Die Erfindung betrifft ein Verfahren zur Arbeitspunktstabilisierung bei berührungsloser 3D- Positionserkennung eines zu vermessenden Objektes mittels wenigstens drei Digitalkameras mit gegebener Brennweite innerhalb eines digitalen Bildverarbeitungssystems, zur Bestimmung der Position des Objektes bzw. der Position von Merkmalen desselben, bei dem die Kameras auf ein gemeinsames Weltkoordinatensystem, WKS, kalibriert sind und das zu vermessende Objekt in den Raum zwischen den Kameras verbracht ist, wobei die das System beschreibenden Komponenten, nämlich Kameraparameter einer der Kameras oder Objektmerkmale des zu vermessenden Objektes, fehlerhaft vermessen sind und damit die digitalen Kameras im WKS eine falsche Weltposition aufweisen, gemäß dem Oberbegriff des Anspruchs 1.

Stand der Technik:

In der automatisierten Fertigung von z.B. Fahrzeugkarossen ist die digitale Bildverarbeitung heute Stand der Technik. Eine der Anwendungen in diesem Prozess ist die Positionserkennung des Werkstückes, wobei kalibrierte Kameras auf das zu bearbeitende Objekt sehen. Aus den sich ergebenden Pixeldaten bestimmter Objektmerkmale wird hiernach die 3-D-Werkstückpose in einem definierten Koordinatensystem berechnet. Der fortschreitende Einzug der Automatisierungstechnik in die industrielle Fertigung von Automobilkarossen führt zu immer komplexeren Aufgabenstellungen für die Robotik. So stellt beispielsweise das Abdichten von Fugen oder Nähten, das Sealing, an Karossen oder Werkstücken durch Industrieroboter ein anspruchsvolles Teilproblem dar. Dazu müssen die Kameras kalibriert sein.
Zur Kalibrierung der Kameras stehen zwei Methoden zur Verfügung, nämlich durch Bestimmung vorab aus den Bilddaten mittels eines Kalibrierkörpers oder einer Kalibriertafeltafel, wobei ein derartiges Verfahren durch die EP 763 406 A1 bekannt geworden ist, um Manipulationen an einem Werkstück durchzuführen, mit mehreren mit diesem zusammenwirkenden räumlich getrennten elektronischen Kameras mit Bildverarbeitung. Jede der mindestens drei räumlich getrennten Kameras nimmt bei deren Einmessung eine ihr zugeordnete Kalibriertafel mit Punktmuster auf, deren Bilder sowie das Punktmuster zur Bestimmung der Lage der einzelnen Kamera im Raum verarbeitet und deren Lage gespeichert werden. Eine Vermessung der Kalibriertafeln zueinander erfolgt hiervon getrennt, wobei diese Werte ebenfalls gespeichert werden. Anschließend wird der zu vermessende Körper in den Raum zwischen den Kameras verbracht. Je ein charakteristischer Punkt auf dem in den Raum verbrachten Körper wird in je einer diesem zugeordneten Kamera abgebildet, so dass dessen Lage im Bild mit seiner konstruktiven vorgegebenen Position des charakteristischen Punktes auf den in den Raum verbrachten Körper zusammen mit den gespeicherten Werten verarbeitet wird; alle derart verarbeiteten Werte charakterisieren die Lage des in den Raum verbrachten Körpers in den sechs räumlichen Freiheitsgraden. Nachteilig an diesem Verfahren ist prinzipiell, dass zum Bestimmen der Lage eines Körpers im Raum Kalibriertafeln verwendet werden, welche sorgfältig gehandhabt werden müssen und nicht beschädigt werden dürfen und, dass die Kalibriertafeln aufwendig mechanisch im Sichtfeld der Kameras positioniert werden müssen und die Positionierbarkeit äußerst wiederholgenau sein muß.
Durch die DE 100 16 963 A1 ist ein Verfahren zur Gewinnung der Kamerapositionen mittels Antastung durch ein externes Messgestell vorgeschlagen worden unter Verwendung von mindestens zwei elektronischen Kameras und digitaler Bildverarbeitung, bei welchem die Kameras auf ein gemeinsames Weltkoordinatensystem kalibriert werden und anschließend das Werkstück in den Raum zwischen den Kameras verbracht wird. Zur Erstellung des gemeinsames Weltkoordinatensystems werden die Kameras einzeln als Lochkameramodelle behandelt, wobei eine direkte Vermessung der Position und der Orientierung der Lichteintrittsöffnung einer jeden Kamera erfolgt, indem die Position und die Orientierung der Lichteintrittsöffnung einer jeden Kamera in ihrem passiven Zustand mit einem separaten Meßsystem vermessen wird, welches zur direkten Antastung der Lichteintrittsöffnung imstande ist und welches die Position und die Orientierung der Lichteintrittsöffnung im Weltkoordinatensystem liefert. Das in den Raum zwischen den Kameras verbrachte Werkstück wird durch die nunmehr aktiven Kameras optisch abgebildet, die Videobilder werden mit einem Rechner zum Auffinden von Merkmalen des Werkstücks ausgewertet. Aus der Kenntnis der Position der Kameras bezüglich des Weltkoordinatensystems, der Videobilder und der Koordinaten der Merkmale des Werkstücks in einem Koordinatensystem des Werkstücks werden durch einen Rechner nach der Methode des Bündelausgleichs die Position des Werkstücks in Weltkoordinaten sowie die Position der Merkmale des Werkstücks in Weltkoordinaten errechnet.
Eine zentrale Frage bei der Positionserkennung eines Werkstücks mittels digitaler Bildverarbeitung mit Digitalkameras ist hierbei, welche Einflüsse die "System beschreibenden Komponenten", wie z.B. die Kameraparameter oder die Objektmerkmale, auf die Positionsbestimmung haben.
Ungenauigkeiten dieser Parameter, beispielsweise bei der Kameraposition, wirken sich zum Einen auf die absolute Positionserkennung aus, zum Anderen rufen sie Verspannungen gleich denen eines mechanischen Systems hervor, durch welche das Messergebnis beim Ausfall einer der Kameras von mehreren mehr oder weniger stark vom tatsächlichen Arbeitspunkt abweichen kann.

Es wird dabei davon ausgegangen, dass die Position eines Werkstücks bzw. eines Werkstückpunktes beim Einmessen erkannt worden ist, allerdings wurde die Position falsch eingemessen bzw. beim Einmessen ergaben sich Fehler, so dass die Position falsch ist. Der Arbeitspunkt, d.i. die erste Position, wird dabei durch ein unabhängiges Meßsystem, wie Theodolit, im Welt-Koordinatensystem, abgekürzt WKS, ermittelt. Aufgrund dieses Fehlers kommt das 3D-System der digitalen Kameras zu einem anderen Ergebnis als die Ermittlung mittels Theodolit im WKS ergeben hat, so daß die digitalen Kameras im WKS eine falsche Weltposition aufweisen und fehlerhaft positioniert werden könnten.

Durch die Literaturstelle Pedersini F et al.: "Accurate and simple geometric calibration of multicamera systems", SIHNAL PROCESSING, AMSTERDAM, NL, Bd. 77, Nr. 3, Sep. 1999 (1999-09), Seiten 309-334, XP004179213 ISSN: 0165-1684, ist ein Kalibrations- und Applikationsverfahren zur Arbeitspunktstabilisierung bei berührungslose 3D- Positionserkennung eines zu vermessenden Objektes mittels wenigstens drei Digitalkameras unter Kalibrierung der Kameras auf ein gemeinsames Weltkoordinatensystem ähnlich der vorliegenden Gattung der Erfindung bekannt geworden. Dieses bekannte Verfahren dient zur Arbeitspunktstabilisierung bei Temperaturdrifts von Kamerasystemen.

Des Weiteren ist durch die Literaturstelle FUA P: "Using model-driven bundleadjustment to model heads from raw video sequences", COMPUTER VISION, 1999, THE PROCEEDINGS OF THE SEVENTH IEEE INTERNATIONAL CON-FERENCE ON KERKYRA, GREECE 20.27 SEPT. 1999, LOS ALAMITOS, CA. USA, IEEE COMPUT. SOC, US, 20.SEPT. 1999 (1999-09-20), Seiten 46-53, XP010350469 ISBN: 0-7695-0164-8, ein Verfahren zur automatischen Herstellung eines Animationsmodells eines komplexen Gesichts aus unkalibrierten Bildsequenzen bekannt geworden. Die Annäherung basiert auf einem Modell betriebenen Bündelausgleich. Das Verfahren benützt hierzu drei sich ergänzende Informationsquellen, nämlich Stereodaten, Silhouttenpumkte und 2-D-Punkte.

Technische Aufgabe:

Der Erfindung liegt die Aufgabe zugrunde, ein Verfahren zur Stabilisierung des Arbeitspunktes bei berührungsloser 3D- Positionserkennung eines zu vermessenden Objektes mittels wenigstens drei Digitalkameras gemäß der genannten Gattung zu schaffen, bei welchem bei einer Verschiebung einer oder mehrerer der Kameras oder bei einer Verschiebung des zu vermessenden Objekts die dadurch entstehenden Ungenauigkeiten bzw. Fehler trotzdem verarbeitet und ausgeglichen werden können.

Offenbarung der Erfindung und deren Vorteile:

Die Lösung der Aufgabe gelingt durch die merkmale des Anspruchs 1.

In einer vorteilhaften Ausgestaltung des erfindungsgemäßen Verfahrens wird das Weltkoordinatensystem bezüglich geeigneter Startwerte in der Nähe des Objektkoordinatensystems definiert und damit werden die Startwerte für die gesuchte Objektposition zu Null gewählt.

Hierzu kann in vorteilhafter Weise aus dem Sollvektor

$$\overrightarrow{\underset{P_{soll}}{k}}$$

und dem Istvektor

$$\overrightarrow{\underset{P_{ist}}{k}}$$

die Drehachse

$$\overrightarrow{V_{dreh}}$$

ermittelt und daraus eine Quarterniondarstellung gewonnen werden und aus den Quarternionen eine Rotationsmatrix berechnet werden, welche zur Korrektur mit der die die Kameraposition beschreibenden Matrix multipliziert wird.

Das erfindungsgemäße Verfahren besitzt den Vorteil, daß mit demselben bei berührungsloser 3D-Positionserkennung eines zu vermessenden Objektes mittels wenigstens drei Digitalkameras bei einer Verschiebung einer oder mehrerer der Kameras die dadurch entstehenden Ungenauigkeiten bzw. Fehler trotzdem verarbeitet und ausgeglichen werden können. Unter der Voraussetzung einer redundanten Anzahl von Kameras besteht der Vorteil des Verfahrens darin, dass, wenn ein Merkmal auf dem zu vermessenden Objektes nicht erkannt wird - oder ein Merkmal "verbeult" wird - oder wenn eine von wenigstens drei Kameras ausfällt, die verbleibenden Kameras trotzdem zu einem gleichbleibenden bzw. ausgeglichenem Ergebnis kommen. Ungenauigkeiten werden somit in richtiger Weise verarbeitet bzw. ausgeglichen. Die Kameras werden somit in erfindungsgemäßer Weise rechnerisch verschoben, so dass der Fehleranteil einer jeden Kamera auf das Gesamtergebnis bezogen gleich groß ist. Aufgrund des erfindungsgemäßen Algorithmus kann mit Hilfe der zweidimensionalen 2D-Bilddaten von bekannten Merkmalen des Objektes auf die dreidimensionale 3D-Werkstückpose in Relation zu einem fest definierten Raum- oder Weltkoordinatensystem WKS geschlossen werden.

Somit wird nach dem erfindungsgemäßen Verfahren die Kameraposition nach der folgenden Gleichung korrigiert:

$$\text{}^{Welt}_{Kamera}T = {}^{WeltAlt}_{Kamera}T \cdot T_{korr}$$

Es sind zwei Varianten des Verfahrens möglich, nämlich zum Einen eine Arbeitspunktstabilisierung durch Variation der Kameraposition, zum Anderen durch Variation der Objektmerkmale, wobei bei dieser Variation der Objektmerkmale zur Arbeitspunktstabilisierung die physikalischen Objektparameterparameter von den Sollmerkmalen, das ist vom theoretischen, durch die Transformationen bestimmten Abbildungsvektor, Sollvektor $^{k}\vec{p}_{soll}$, auf die sich ergebenden Istmerkmale, das ist der sich tatsächlich einstellende Istvektor $^{k}\vec{p}_{ist}$, verschoben werden, wobei zur Erzielung einer Eindeutigkeit die Sollmerkmale $[\text{Sollvektor } ^{k}\vec{p}_{soll}]$ auf dem kürzesten Weg zu den Istmerkmalen [Istvektor $^{k}\vec{p}_{ist}$] verschoben werden.

Zum Anderen ist eine Arbeitspunktstabilisierung durch Variation der Objektmerkmale möglich, so dass sich im Objektkoordinatensystem ein korrigierter Punkt nach folgender Gleichung ergibt:

$$^{o}\vec{p}_{korr} = \left(T_{abs}\right)^{-1} \cdot {}^{Welt}_{Kamera}T \cdot {}^{k}\vec{p}_{korr}$$

Kurzbeschreibung der Zeichnung, in der zeigen:

Figur 1    ein Lochkameramodell
Figur 2    eine Darstellung zur Positionserkennung starrer Körper 2
Figur 3    eine Darstellung einer Fehlerrepräsentation durch einen Absolutvektor
Figur 4    eine Darstellung der Abbildungsstrahlen auf dem CCD-Chip 3
Figur 5    eine Darstellung der Abbildung von Merkmalen
Figur 6    eine graphische Wiedergabe von relativen Objektparametern X in Abhängigkeit von X mit vier Kameras 1 als Ergebnis der Arbeitspunktstabilisierung und
Figur 7    eine graphische Wiedergabe von relativen Objektparametern X in Abhängigkeit von X mit drei Kameras 1 als Ergebnis der Arbeitspunktstabilisierung.

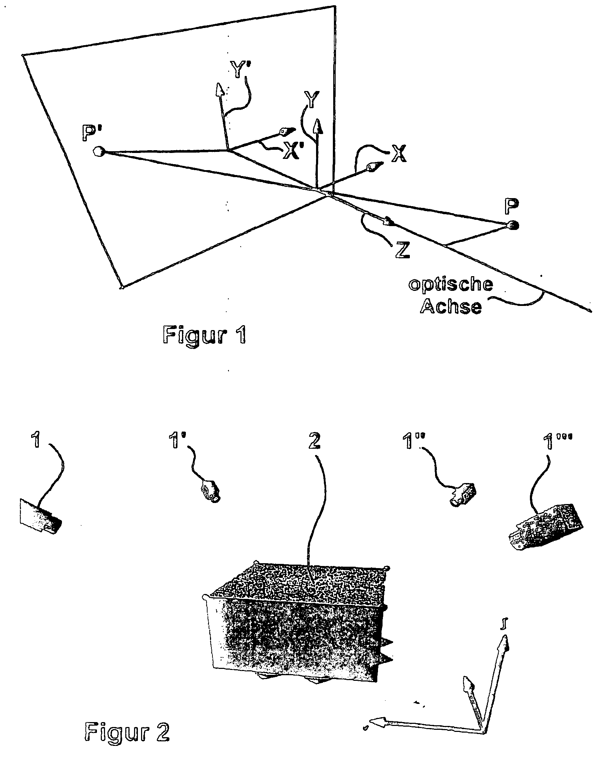

Zur Erläuterung der Erfindung wird auf das in der Bildverarbeitung am Häufigsten verwendete Kameramodell der Lochkamera, Figur 1, zurückgegriffen, welche ein Lochkameramodell illustriert, nämlich die perspektivische Abbildung eines dreidimensionalen Raumpunktes P in ein unverzeichnetes, zweidimensionales Pixel P' auf der Chipebene des CCD-Chips der digitalen Kamera. Die hier zu erläuternden internen Kameraparameter reduzieren das reale Kameramodell auf das idealisierte Modell einer Lochkamera.

Die Lochkamera weist die internen und externen Parameter, gekennzeichnet durch "...", nämlich interne Parameter "*radiale Linsenverzeichnung $\kappa$ erster Ordnung*", sowie die "*Skalierungsfaktoren $S_x$, $S_y$*" und eine "*Chiphauptpunktverschiebung $C_x$, $C_y$*" auf; des Weiteren zählt die "*Brennweite f*" mit zu den internen Größen einer Kamera. Die externen Parameter "*Rot*" und "*T*" beschreiben die Kameralage relativ zu einem fixen Koordinatensystem, beispielsweise zu einem definierten Weltkoordinatensystem, abgekürzt WKS.

In seiner Gesamtheit stellt das Kameramodell die Abbildungsvorschrift eines dreidimensionalen Punktes $\overline{p}_w$ in eine zweidimensionale Rechnerkoordinate $X_r/Y_r$ des digitalisierten Bildes dar. Die Abbildungsvorschrift kann in vier Schritte unterteilt werden:

1.1 Transformation eines Punktes $\overline{p}_w$ vom Weltkoordinatensystem in einen Punkt $\overline{p}_c$ im Kamerakoordinatensystem (externe Parameter):

$$\bar{p}_c = \left(x_c, y_c, z_c\right)^T = Rot \cdot \left(x_w, y_w, z_w\right)^T + T$$

wobei *Rot* die Rotationsmatrix und *T* der Translationsvektor ist.

1.2 Perspektivische Projektion (Strahlensatz) des Punktes $\bar{p}_c$ in ein unverzeichnetes Pixel X/ Y, interner Parameter Brennweite f:

$$X = f \cdot x_c / z_c \quad \text{und} \quad Y = f \cdot y_c / z_c$$

1.3 Verzeichnung in ein radial verzerrtes Pixel $X_v/Y_v$, interner Parameter Linsenverzeichnung $\kappa$:

$$X_v = 2X/(1 + \sqrt{(1 - 4kR^2)}) \quad \text{und} \quad Y_v = 2Y/(1 + \sqrt{(1 - 4kR^2)})$$

mit $R^2 = X^2 + Y^2$ bzw.

$$X = X_v/(1 + kR_v^2) \quad \text{und} \quad Y = Y_v/(1 + kR_v^2)$$

mit $R_v^2 = X_v^2 + Y_v^2$

*1.4* Berechnung der Rechnerkoordinaten $X_r/Y_r$, 4 interne Parameter: Skalierungsfaktoren $S_x/S_y$ und Chiphauptpunktverschiebung $C_x/C_y$:

$$X_r = X_v/S_x + C_x \quad \text{und} \quad Y_r = Y_v/S_y + C_y$$

Mittels Kalibrierung werden alle ex- und internen Parameter der Kamera bzw. der Kameras ermittelt, so dass eine Rechnerkoordinate durch umgedrehte Vorgehensweise in ein ideales Pixel X/Y zurück gerechnet werden kann.

Hinsichtlich der Positionserkennung illustriert Figur 2 beispielhaft die Lageerkennung eines quaderförmigen Werkstückes mit Hilfe von vier digitalen Kameras, nämlich Positionserkennung starrer Körper. Ziel ist es, mit Hilfe der zweidimensionalen 2D- Bilddaten von bekannten Merkmalen des Objektes auf die dreidimensionale 3D- Werkstückpose in Relation zu einem fest definierten Raum- oder Weltkoordinatensystem zu schließen.

Zur Positionsbestimmung wird der Bündelausgleich herangezogen:

$$e(x) = \sum_{j=1}^{K} \sum_{i=1}^{N} \left\| \bar{q}_i^j(g^{j_{int}}) - q_i^j({}_0^w T \cdot {}^o\bar{p}_i, g^{j_{int}}) \right\|^2 \rightarrow \text{Min!}$$

wobei bedeuten: K=Anzahl der Kameras, N=Anzahl der Merkmale.

Ausgehend von geeigneten Startwerten wird eine Objektposition gefunden, bei der die Summe der Abstände von den 2D-Bilddaten $\bar{q}_i^j(g^{j_{int}})(g^{j_{int}})$ der i-ten Merkmale in den j-ten Kameras zu den durch die Transformationen, $g^{j_{ext}}$ und gesuchte Objektposition ${}_0^w T$, und den Objektparametern, also den Merkmalsvektoren im Objektkoordinatensystem ${}^o\bar{p}_i$, theoretisch gegebenen 2D-Projektionen $q_i^j({}_0^w T \cdot {}^o\bar{p}_i, g^{j_{int}})$, minimiert wird. Hierbei stellen $g^{j_{int}}$ die internen und $g^{j_{ext}}$ die externen Parameter der Kamera dar.

Wird das Weltkoordinatensystem bezüglich geeigneter Startwerte in der Nähe des Objektkoordinatensystems definiert, können die Startwerte für die gesuchte Objektposition zu Null gewählt werden.

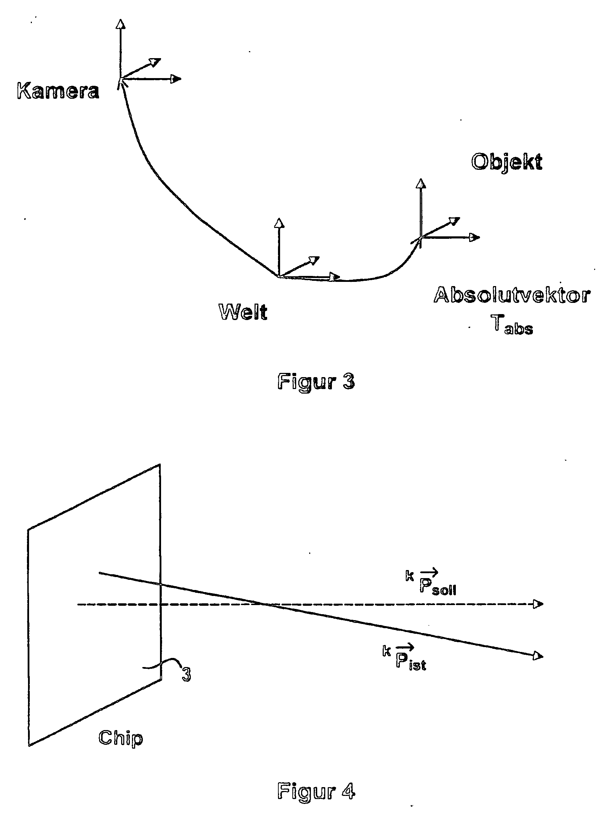

Definiert das Objekt bezüglich Nullmessung beim Einrichten des Systems das Weltkoordinatensystem, d.h. die Koordinatensysteme liegen aufeinander, so ist die berechnete Objektposition, der sogenannte Absolutvektor, nur virtuell vorhanden und repräsentiert die Fehler des gesamten Messsystems im Arbeitspunkt nahe am Weltkoordinatensystem. Folglich ist es erforderlich, den Absolutvektor in die Positionsberechnung mit einzubeziehen. In Figur 3 ist die Fehlerrepräsentation durch den Absolutvektor gezeigt.

Betreffend die Arbeitspunktstabilisierung weisen reale optische Messsysteme Fehler auf, die zu instabilen Ergebnissen führen. Hierdurch neigt das Messergebnis je nach Größe der Fehler dazu, vom Arbeitspunkt abzuweichen. Dieses ist insbesondere dann der Fall, wenn eine Kamera des Gesamtsystems ausfällt.

Zwei nachfolgend beschriebene Verfahren bewirken eine Arbeitspunktstabilisierung. Dabei können entweder die Kamerapositionen oder die Merkmalskoordinaten als nicht konstante Größen dienen. Bei der ersten Variante kann auch von einem Nachkalibrieren der Kameras am Objektmodell gesprochen werden.

I. Arbeitspunktstabilisierung durch Variation der Kameraposition: (gemäß Erfindung)

Der Ansatz für diese Methode kann direkt aus dem Bündelausgleich gewonnen werden, nämlich zu:

$$\sum_{i=1}^{N}\left\{\left(X_i - f\cdot\frac{^k\bar{p}_{xi}}{^k\bar{p}_{zi}}\right)^2 + \left(Y_i - f\cdot\frac{^k\bar{p}_{yi}}{^k\bar{p}_{zi}}\right)^2\right\} = \min!$$

Durch den Bündelausgleich wird die Objektposition bestimmt, die für alle Kameras den Abstand zwischen den realen Abbildungsdaten und den unter anderem durch die externen Kalibrierungsdaten bestimmten Solldaten minimiert, was in Figur 4 gezeigt ist, welche den Abbildungsstrahlengang auf dem CCD-Chip zeigt. Dabei sind:

$$^k\bar{p}_{ist} = \begin{pmatrix} X\cdot S_x \\ Y\cdot S_y \\ f \end{pmatrix}$$

*f Brennweite, $S_x$ / $S_y$ Skalierungsfaktoren, X / Y Pixelkoordinaten*

$$^k\bar{p}_{soll} = \left(^{Welt}_{Kamera}T\right)^{-1}\cdot\left(^{Welt}_{Objekt}T\right)\cdot{}^o\bar{p}$$

$^o\bar{p}$ Merkmalsvektor in Objektkoordinaten

Im Folgenden ist die Kameraposition im Raum so zu bestimmen, dass die Fehler auf dem Chip eleminiert werden, was heißt, dass der Soll- und der Iststrahl zur Deckung gebracht werden.

Gesucht ist die Matrix $^{Soll}_{Ist}T$, die den Ist- auf den Sollstrahl abbildet, um im Anschluss an die Nullmessung die Kamerapositionen im Weltkoordinatensystem zu korrigieren. Soll- und Istvektor erlauben die Ermittlung der unnormierten Drehachse $\bar{v}_{dreh}$:

$$\bar{v}_{dreh} = {}^k\bar{p}_{ist}\times{}^k\bar{p}_{soll}$$

Liegen Welt- und Objektkoordinatensystem aufeinander, so ist

$$^k\bar{p}_{soll} = \left(^{Welt}_{Kamera}T\right)^{-1}\cdot T_{abs}\cdot{}^o\bar{p}$$

bzw. der Drehwinkel $\Theta$:

$$\sin\Theta = \frac{|\vec{v}_{dreh}|}{\left|{}^{h}\vec{p}_{ist}\right| \cdot \left|{}^{h}\vec{p}_{soll}\right|} \Rightarrow \cos\frac{\Theta}{2}$$

Für die Quarterniondarstellung muss die so gewonnene Drehachse normiert werden:

$$\cos^{2}\left(\frac{\Theta}{2}\right) + \frac{|\vec{v}_{dreh}|^{2}}{k^{2}} = 1 \Rightarrow k = \frac{|\vec{v}_{dreh}|}{\sin\frac{\Theta}{2}}$$

Die Quarternionen $q_0$-$q_3$ der Korrekturmatrix sind nun bekannt mit:

$$\begin{pmatrix} q_0 \\ q_1 \\ q_2 \\ q_3 \end{pmatrix} = \begin{pmatrix} \cos\dfrac{\Theta}{2} \\ \dfrac{{}^{h}\vec{p}_{ist} \times {}^{h}\vec{p}_{soll}}{k} \end{pmatrix}$$

Aus den Quarternionen folgt die Rotationsmatrix:

$$R = \begin{pmatrix} r_{11} & r_{12} & r_{13} \\ r_{21} & r_{22} & r_{23} \\ r_{31} & r_{32} & r_{33} \end{pmatrix}$$

mit:

$$r_{11} = 1 - 2(q_2{}^2 + q_3{}^2)$$
$$r_{12} = 2(q_1 q_2 - q_0 q_3)$$
$$r_{13} = 2(q_1 q_3 + q_0 q_2)$$
$$r_{21} = 2(q_1 q_2 + q_0 q_3)$$
$$r_{22} = 1 - 2(q_1{}^2 + q_3{}^2)$$
$$r_{23} = 2(q_2 q_3 - q_0 q_1)$$
$$r_{31} = 2(q_1 q_3 - q_0 q_2)$$
$$r_{32} = 2(q_2 q_3 + q_0 q_1)$$
$$r_{33} = 1 - 2(q_1{}^2 + q_2{}^2)$$

$$\Rightarrow T_{korr} = \begin{pmatrix} r_{11} & r_{12} & r_{13} & 0 \\ r_{21} & r_{22} & r_{23} & 0 \\ r_{31} & r_{32} & r_{33} & 0 \\ 0 & 0 & 0 & 1 \end{pmatrix} = {}_{Ist}^{Soll}T$$

Wird diese Matrix als Korrektur mit der die Kameraposition beschreibenden Matrix multipliziert, so ergeben sich im Arbeitspunkt keine Abweichungen vom Sollzum Iststrahl.

Es sei angemerkt, dass durch diese Prozedur ein Freiheitsgrad nicht bestimmt ist, nämlich:

Der Iststrahl kann durch unendlich viele Abbildungen auf den Sollstrahl gedreht werden, da sich keine eindeutige Vorschrift aus den zwei Vektoren *Soll* und *Ist* ermitteln lässt. Praktisch bedeutet dies, dass an die Korrekturmatrix noch beliebige Drehungen um den Iststrahl multipliziert werden können, ohne einen Fehler im Arbeitspunkt zu erzeugen. In der Regel lassen sich allerdings die externen Rotationsparameter bereits so gut im Vorhinein bestimmen, dass eine weitere Betrachtung hinfällig wird.

Die Kamera wird somit korrigiert mit:

$$_{Kamera}^{Welt}T = {}_{Kamera}^{WeltAlt}T \cdot T_{korr}$$

II. Arbeitspunktstabilisierung durch Variation der Objektmerkmale: (Vergleichs beispiel)

Analog zum kameraseitigen Verfahren kann durch Verschiebung der physikalischen Objektparameterparameter vom theoretischen, durch die Transformationen bestimmten Abbildungsstrahl, das ist der Sollstrahl, auf den sich tatsächlich

$$^o\bar{p}_{korr} = \left(T_{obs}\right)^{-1} \cdot {}_{Kamera}^{Welt}T \cdot {}^t\bar{p}_{korr}$$

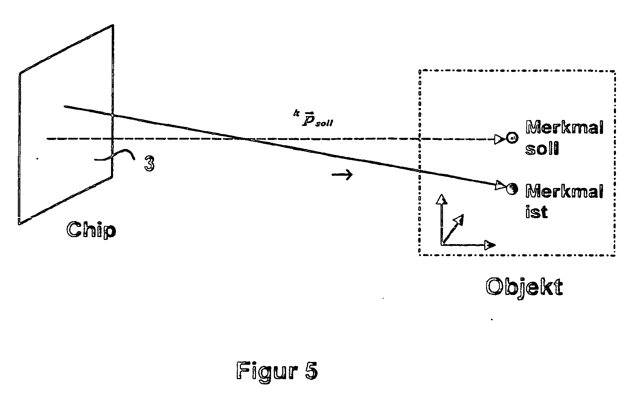

einstellenden Iststrahl eine Stabilisierung erzielt werden, was in Figur 5 durch Abbildung von Merkmalen gezeigt ist.

Aus der Figur 5 geht hervor, dass auch diese Abbildung nicht eindeutig ist, da das Merkmal an eine beliebige Stelle auf den Iststrahl geschoben werden kann, um eine Fehlerelimination zu erreichen. Sinnvollerweise ergibt sich Eindeutigkeit allerdings dadurch, dass das Sollmerkmal auf dem kürzesten Weg zum Iststrahl verschoben wird, nämlich:

$$^t\bar{p}_{soll} = \left({}_{Kamera}^{Welt}T\right)^{-1} \cdot T_{obs} \cdot {}^o\bar{p}$$

Tatsächlich liegt das Merkmal auf dem "gefundenen Strahl", beschrieben durch den normierten Vektor:

$$^k \vec{p}_{ist} = \begin{pmatrix} X \cdot S_x \\ Y \cdot S_y \\ f \end{pmatrix} \cdot \frac{1}{\left( (X \cdot S_x)^2 + (Y \cdot S_y)^2 + f^2 \right)^{\frac{1}{2}}}$$

Im Kamerakoordinatensystem kann der korrigierte Punkt berechnet werden zu:

$$^k \vec{p}_{korr} = \left( ^k \vec{p}_{ist} \cdot {}^k \vec{p}_{soll} \right) ^k \vec{p}_{ist}$$

woraus sich der korrigierte Punkt im Objektkoordinatensystem ergibt:

$$^o \vec{p}_{korr} = \left( T_{abs} \right)^{-1} \cdot {}^{Welt}_{Kamera}T \cdot {}^k \vec{p}_{korr}$$

Nach der sogenannten Referier- oder Nullmessung zur Feststellung des Absolutvektors, Figur 3, werden folglich die Objektmerkmale mit der beschriebenen Methode neu bestimmt und in das System integriert.

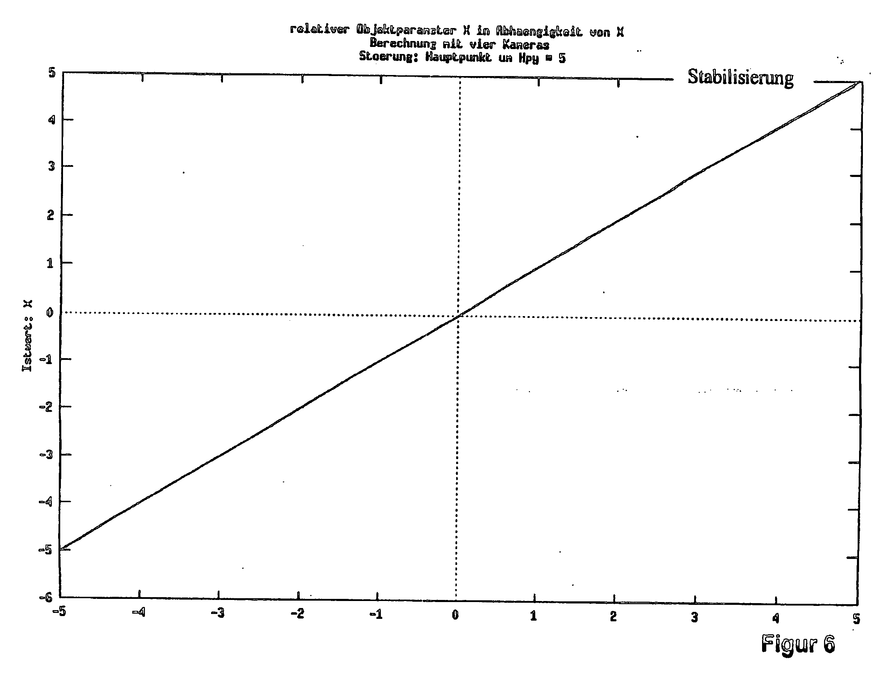

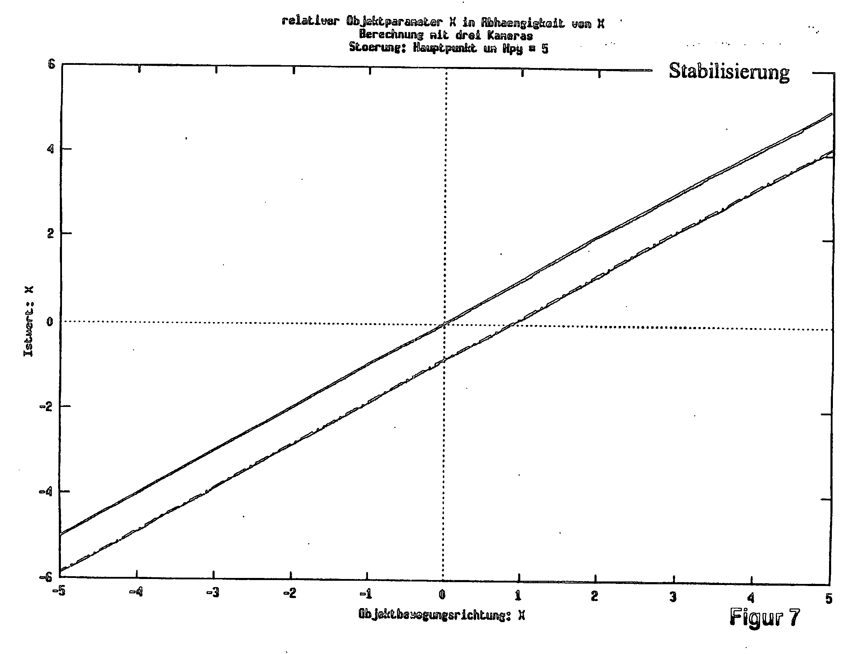

Ein Beispiel sei im Folgenden anhand der Figuren 1 bis 7 und insbesondere anhand der Figuren 6 und 7 beschrieben. Sie zeigen das Ergebnis für eine berechnete Objektpositionskoordinate X eines Objektes 2, Figur 2, in Abhängigkeit von der Objektbewegungsrichtung X mit vier bzw. - bei einem Kamera- bzw. einem Merkmalausfall - drei Kameras 1, 1', 1'', 1''' gemäß Figur 2, nach einer Nullmessung, wobei $T_{abs}$ mit eingerechnet wird. Hierbei weist eine der Kamera 1, 1', 1'', 1''' eine Störung von 5 Pixeln im Chiphauptpunkt des Chips 3 auf.

Aus Figur 6 wird deutlich, dass die Auswirkungen dieses Fehlers bei der Verwendung aller - vier - Kameras 1, 1', 1'', 1''' durch die Nullmessung eliminiert werden. Wird allerdings ein Merkmal nicht erkannt, was in Figur 7 gelten soll, und steht für die Berechnung nicht zur Verfügung, so führen die durch die Störung erzeugten Spannungen zum Sprung des Ergebnisses - das ist die strichpunktierte Linie - während die Berechnung mit den stabilisierenden Systemparametern - eine durchgezogene und eine punktierte Linie liegen in Figur 6 übereinander - zu einem im Arbeitspunkt stabilen Ergebnis führt.

Abschließend ist festzuhalten, dass die kamera- oder objektseitige Arbeitspunktstabilisierung die Folgen von Störungen in den Systemparametern in einem berührungslosen 3D-Messsystem nicht eliminiert. In der Regel stehen bei einem solchen System mehr Kameras als für eine Positionsberechnung nötig zur Verfügung. Das hierdurch entstandene Ausgleichsproblem führt auf eine optimierende Lösung, die allerdings für jede einzelne Kamera Differenzen zwischen Theorie und Wirklichkeit hervorruft. Stehen für die Berechnung nicht mehr alle Kameras zur Verfügung, kommt es zu den beschriebenen Sprüngen um den Arbeitspunkt.

Gewerbliche Anwendbarkeit:

Der Gegenstand der Erfindung ist insbesondere zur Stabilisierung des Arbeitspunktes bei berührungsloser 3D-Positionserkennung eines zu vermessenden Objektes mittels wenigstens drei Digitalkameras anwendbar, wenn entweder eine Kamera des Gesamtsystems ausfällt oder wenn Objektmerkmale variiert worden sind.

**Patentansprüche**

1. Verfahren zur Arbeitspunktstabilisierung bei berührungsloser 3D-Positionserkennung eines zu vermessenden Objektes (2) mittels wenigstens drei Digitalkameras (1,1',1'',1''') mit gegebener Brennweite innerhalb eines digitalen Bildverarbeitungssystems, zur Bestimmung der Position des Objektes (2) bzw. der Position von Merkmalen desselben, bei dem die Kameras (1,1',1'',1''') auf ein gemeinsames Weltkoordinatensystem, WKS, kalibriert sind und das zu vermessende Objekt (2) in den Raum zwischen den Kameras (1,1',1'',1''') verbracht ist, wobei die das System beschreibenden Komponenten, nämlich Kameraparameter einer der Kameras oder Objektmerkmale des zu vermessenenden Objektes (2), fehlerhaft vermessen sind und damit die digitalen Kameras (1,1',1'',1''') im WKS eine falsche Weltposition aufweisen, wobei

- die Transformationsvorschrift $(X,Y)_j = q^j\left(\vec{p}_w, g^j_{ext}\right)$ zur Transformation eines dreidimensionalen Punktes im Messraum mit gegebenen Weltkoordinaten $\vec{p}_w$ in die theoretischen zweidimensionalen digitalen Bildkoordinaten $(X/Y)$, der j-ten Kamera im Allgemeinen angesetzt wird, worin für $g^j_{ext}$ die externen Kameraparameter steht,

- die Summe der Abstandsquadrate der Abstände zwischen den gemessenen zweidimensionalen Bilddaten $\tilde{q}^j_i$ und den aus der Transformationsvorschrift folgenden theoretischen Bildpunktkoordinaten der $q^j_i\left({}^w_o T \cdot {}^o \vec{p}_i, g^j_{ext}\right)$ der i-ten Merkmale in den j-ten Kameras gebildet wird, worin ${}^o\vec{p}_i$ Merkmalsvektoren in einem Objektkoordinatensystem bezeichnen und ${}^w_o T$ auf die gesuchten Merkmalspositionen führt, wobei unter Heranziehung von Transformationsvorschriften zur Transformation eines dreidimensionalen Punktes ($\vec{p}w$) gegebener Koordinaten in eine zweidimensionale Rechnerkoordinate ($X_r/Y_r$) des digitalisierten Bildes die Positionsbestimmung mittels eines Bündelausgleichs erfolgt und damit eine Objektposition bestimmt wird, bei der die Summe der Abstandsquadrate von den 2D-Bilddaten $\left[\tilde{q}^j_i(g^{j\,int})\right]$ der i-ten Merkmale in den j-ten Kameras (1,1',1",1"') zu den durch die Transformationen und den Objektparametern, nämlich Merkmalsvektoren im Objektkoordinatensystem (${}^o\vec{p}_i$), theoretisch gegebenen 2D-Projektionen $\left[q^j_i({}^w_o T \cdot {}^o \vec{p}_i, g^{j\,ext})\right]$, minimiert wird und wobei

- mittels eines Bündelausgleichs die Summe der Abstandsquadrate zur Bestimmung von Merkmalspositionen minimiert wird und dabei unter Variation der Kameraposition Kamerapositionen im Raum so bestimmt werden, dass die Fehler auf dem Chip der Digitalkameras eliminiert werden,

- eine Matrix ${}^{Soll}_{Ist} T$ bestimmt wird, welche einen Vektor $^k\vec{p}_{soll}$ in Soll-Strahlrichtung der Merkmalsabbildung auf einen Vektor $^k\vec{p}_{ist}$ in Ist-Strahlrichtung der Merkmalsabbildung abbildet und zur Deckung bringt.

2. Verfahren nach Anspruch 1, **dadurch gekennzeichnet,**
**dass** das Weltkoordinatensystem WKS bezüglich geeigneter Startwerte in der Nähe des Objektkoordinatensystems definiert wird und damit die Startwerte für die gesuchte Objektposition zu Null gewählt werden.

3. Verfahren nach Anspruch 1 oder 2, **dadurch gekennzeichnet,**
**dass** aus dem Soll- ($^k\vec{p}_{soll}$) und dem Istvektor ($^k\vec{p}_{ist}$) die Drehachse ($\vec{v}_{dreh}$) ermittelt und daraus eine Quartemiondarstellung gewonnen und aus den Quartemionen eine Rotationsmatrix berechnet wird, welche zur Korrektur mit der die Kameraposition beschreibenden Matrix multipliziert wird.

**Claims**

1. A method for stabilizing an operating point in a contactless 3D detection of a position of an object (2) that is to be measured by means of at least three digital cameras (1, 1', 1", 1"') at a given focal length within a digital imaging-processing system, for determining the position of the object (2) or the position of features thereof, in which method the cameras (1, 1', 1", 1"') are calibrated to a shared world coordinate system (WCS), and the object (2) that is to be measured is placed into the space between the cameras (1, 1', 1", 1"'), wherein the components that describe the system, namely, camera parameters of one of the cameras, or object features of the object (2) that is to be measured, are incorrectly measured and thus the digital cameras (1, 1', 1", 1"') have an incorrect world position in the WCS, wherein

- a transformation rule $(X,Y)_j = q^j\left(\vec{p}_w, g^j_{ext}\right)$ for the transformation of a three-dimensional point in the measuring space with given world coordinates $\vec{p}_w$ into the theoretical two-dimensional digital image coordinates $(X/Y)_j$ of the j$^{th}$ camera is generally applied, wherein $g^j_{ext}$ stands for the external camera parameters;

- a sum of squares of distance of distances between the measured two-dimensional image data $\tilde{q}^j_i$ and the theoretical image point coordinates $q^j_i\left({}^w_o T \cdot {}^o \vec{p}_i, g^j_{ext}\right)$ of the i$^{th}$ features in the j$^{th}$ cameras, obtained by applying the transformation rule, is formed, wherein $^o\vec{p}_i$ refers to feature vectors in an object coordinate system and $^w_oT$ leads to the sought feature positions, wherein the positional determination is performed, and therefore the position on an object is determined, by means of a bundle adjustment by applying transformation rules for transforming a three-dimensional point $(\vec{p}_w)$ with given coordinates into a two-dimensional computed coordinate $(X_r/Y_r)$ of the digitized image, wherein the sum of the squares of distance of the 2D image data $\left[\tilde{q}_i^j\left(g^{j\text{int}}\right)\right]$ of the i$^{th}$ features in the j$^{th}$ cameras (1, 1', 1", 1''') is minimized to the 2D projections $\left[q_i^j\left(^w_oT\cdot^o\vec{p}_i,g^{j\text{ext}}\right)\right]$ theoretically given by the transformations and object parameters, i.e. feature vectors in the coordinate system $(^o\vec{p}_i)$, and wherein

- the sum of the squares of distance for determining feature positions is minimized by means of a bundle adjustment and camera positions in the space are determined upon varying the camera position so that the errors on the chip of the digital cameras are eliminated,

- a matrix $^{Soll}_{Ist}T$ is determined that images a vector $^k\vec{p}_{soll}$ in the target beam direction of the feature imaging onto a vector $^k\vec{p}_{ist}$ in the actual beam direction of the feature imaging and renders them congruent.

2. The method according to claim 1, **characterized in that** in terms of suitable starting values, the world coordinate system WCS is defined in the vicinity of the object coordinate system and thus the starting values for the sought object position are selected at zero.

3. The method according to claim 1 or 2, **characterized in that** the rotation axis $(\vec{v}_{dreh})$ is determined on the basis of the target vector $(^k\vec{p}_{soll})$ and of the actual vector $(^k\vec{p}_{ist})$, and from this, a quaternion representation is obtained, and from the quaternions, a rotation matrix is calculated that, for correction purposes, is multiplied by the matrix that describes the camera position.

## Revendications

1. Procédé pour stabiliser le point de mire dans la détermination tridimensionnelle sans contact de la position d'un objet à mesurer (2) au moyen d'au moins trois caméras numériques (1,1',1",1''') ayant une distance focale définie dans un système numérique de traitement d'images, destiné à déterminer la position de l'objet (2) ou la position de caractéristiques distinctives de celui-ci, dans lequel les caméras (1,1',1",1''') sont calibrées sur un système de coordonnées mondial commun WKS et l'objet à mesurer (2) est mis en place dans l'espace entre les caméras (1,1',1",1'''), les composantes décrivant le système, à savoir les paramètres de caméra de l'une des caméras ou les caractéristiques distinctives de l'objet à mesurer (2), étant mesurées de façon inexacte et les caméras numériques (1,1',1",1''') présentant de ce fait une position inexacte dans le système de coordonnées mondial WKS, procédé dans lequel

- l'on applique en général la règle de transformation $(X,Y)_j = q^j\left(\vec{p}_w, g^j_{ext}\right)$ pour la transformation d'un point tridimensionnel dans l'espace de mesure avec des coordonnées mondiales données $\vec{p}_w$ dans les coordonnées théoriques de l'image numérique bidimensionnelle $(X/Y)_j$ de la jième caméra, $g^j_{ext}$ figurant pour les paramètres de caméra externes,

- l'on forme la somme des carrés des distances des écarts entre les données d'image bidimensionnelles mesurées $\tilde{q}_i^j$ et les coordonnées de points d'image théoriques $q_i^j\left(^w_oT\cdot^o\vec{p}_i,g^j_{ext}\right)$ des iièmes caractéristiques dans les jièmes caméras, coordonnées issues de la règle de transformation, $^o\vec{p}_i$ désignant les vecteurs de caractéristiques distinctives dans un système de coordonnées de l'objet et $^w_oT$ menant aux positions des caractéristiques distinctives cherchées, et dans lequel, en ayant recours aux règles de transformation pour la transformation d'un point tridimensionnel $(\vec{p}_w)$ ayant des coordonnées données en une coordonnée d'ordinateur bidimensionnelle $(X_r/Y_r)$ de l'image numérisée, la détermination de la position s'effectue au moyen d'un ajustement de faisceaux en déterminant ainsi une position de l'objet, dans laquelle la somme des carrés des distances des données d'image bidimensionnelles $\left[\tilde{q}_i^j\left(g^{j\text{int}}\right)\right]$ des iièmes caractéristiques distinctives dans les jièmes caméras (1, 1', 1", 1''') aux projections bidimensionnelles $\left[q_i^j\left(^w_oT\cdot^o\vec{p}_i, g^{j\text{ext}}\right)\right]$ données théoriquement par les transformations et les paramètres de l'objet, à savoir les vecteurs de caractéristiques dans le système de coordonnées de l'objet ($^{o}\vec{p}_i$), est minimisée, et dans lequel

- la somme des carrés des distances pour la détermination des positions des caractéristiques distinctives est minimisée au moyen d'un ajustement des faisceaux et ce faisant, en faisant varier la position de la caméra, les positions des caméras dans l'espace sont déterminées de sorte que les erreurs sur la puce des caméras numériques sont éliminées, et

- une matrice $^{Soll}_{Ist}T$ est définie qui reproduit un vecteur $^{k}\vec{p}_{soll}$ dans le sens de rayon théorique de la reproduction des caractéristiques distinctives sur un vecteur $^{k}\vec{p}_{ist}$ dans le sens de rayon réel de la reproduction des caractéristiques distinctives, et amène les vecteurs à se recouvrir.

**2.** Procédé selon la revendication 1, **caractérisé en ce que**
le système de coordonnées mondial WKS est défini, au regard de données de départ appropriées, à proximité du système de coordonnées de l'objet et, de ce fait, les valeurs de départ pour la position de l'objet cherchée sont retenues à zéro.

**3.** Procédé selon la revendication 1 ou 2, **caractérisé en ce que**
l'axe de rotation ($\vec{v}_{dreh}$) est déterminé à partir du vecteur théorique ($^{k}\vec{p}_{soll}$) et du vecteur réel ($^{k}\vec{p}_{ist}$), qu'on obtient à partir de cela une représentation de quaternions et qu'une matrice de rotation est calculée à partir des quaternions, laquelle matrice est multipliée à des fins de correction par la matrice décrivant la position de la caméra.

Figur 1

Figur 2

Kamera

Objekt

Welt

Absolutvektor
$T_{abs}$

Figur 3

$k\,\overrightarrow{P}_{soll}$

$k\,\overrightarrow{P}_{ist}$

Chip

Figur 4

Figur 5

Figur 6

Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 763406 A1

- DE 10016963 A1

**In der Beschreibung aufgeführte Nicht-Patentliteratur**

- **PEDERSINI F et al.** Accurate and simple geometric calibration of multicamera systems. *SIHNAL PROCESSING, AMSTERDAM, NL,* 1999, vol. 77 (3), ISSN 0165-1684, 309-334

- **FUA P.** Using model-driven bundleadjustment to model heads from raw video sequences. *COMPUTER VISION, 1999, THE PROCEEDINGS OF THE SEVENTH IEEE INTERNATIONAL CON-FERENCE ON KERKYRA,* 20. September 1999, ISBN 0-7695-0164-8, 46-53